# EUROPEAN PATENT APPLICATION

(11) **EP 2 551 979 A1**
(43) Date of publication of application: **30.01.2013**
(21) Application number: 10848455.1
(22) Date of filing: 07.10.2010
(51) Int. Cl.: H02G 11/00, B60R 16/02, H02G 3/04

(54) **ELECTRICITY-FEEDING WIRING STRUCTURE**

(30) Priority: 24.03.2010 JP 2010067116
(71) Applicant: Sumitomo Wiring Systems, Ltd., Yokkaichi-shi Mie 510-0058 (JP)
(72) Inventor: TANIGUCHI Hiroyasu, Yokkaichi-shi Mie 510-0058 (JP); KIDA Yuuji, Yokkaichi-shi Mie 510-0058 (JP)
(74) Representative: Müller-Boré & Partner Patentanwälte
(86) International application number: PCT/JP2010/067657
(87) International publication number: WO 2011/118063

(57) **Abstract**

A power feeding wiring structure includes a protection tube, a plurality of wires arranged in the protection tube, a slide door side fixing device provided on a slide door and adapted to restrict a moving range of the protection tube near the slide door while fixing one end of the protection tube, and a vehicle body side fixing device provided on a vehicle body and adapted to fix the other end of the protection tube. The slide door side fixing device includes a base portion which is fixed in the slide door while guiding the protection tube, a pivot portion which is pivoted about a first rotary shaft relative to the base portion while guiding the protection tube, and a biasing portion which rotates the pivot portion in a biasing direction by accumulated elastic energy. The pivot portion includes a joint portion which is bent according to a force acting on the pivot portion while guiding the protection tube. A center line along a length direction of the pivot portion is located in an area at a front side in the biasing direction with respect to a first plane defined by the position of a leading end of the pivot portion and the first rotary shaft. The pivot portion is pivoted and the joint portion is bent when the slide door is opened and closed.

## Description

### Technical Field

The present invention relates to a power feeding wiring structure for arranging a plurality of wires between a slide door and a vehicle body.

### Background Art

Conventionally, there is known a technology for suppressing the hang-down of a wiring harness arranged between a vehicle body and a slide door when the slide door is opened (for example, patent literature 1).

### Citation List

### Patent Literature

Patent Literature 1: Japanese Unexamined Patent Publication No. 2010-023757

### Summary of Invention

### Technical Problem

In the technology of patent literature 1, the wiring harness is covered by a corrugated tube. Further, a part of the corrugated tube arranged in the slide door is guided by a rotary body of a mounting device.

As a result, there arises a problem that a part of the corrugated tube arranged in the slide door, which part is not guided by the rotary body of the mounting device, interferes with the slide door depending on a mounting state of the mounting device.

Accordingly, the present invention aims to provide a power feeding wiring structure capable of achieving satisfactory opening and closing movements of a slide door.

### Solution to Problem

In order to solve the above problem, a first aspect is directed to a power feeding wiring structure, comprising a protection tube; a plurality of wires arranged in the protection tube; a slide door side fixing device provided on a slide door and adapted to restrict a moving range of the protection tube near the slide door while fixing one end of the protection tube; and a vehicle body side fixing device provided on a vehicle body and adapted to fix the other end of the protection tube; wherein the slide door side fixing device includes a base portion which is fixed in the slide door while guiding the protection tube, a pivot portion which is pivoted about a first rotary shaft relative to the base portion while guiding the protection tube, and a biasing portion which rotates the pivot portion in a biasing direction by accumulated elastic energy; the pivot portion includes a joint portion which is bent according to a force acting on the pivot portion while guiding the protection tube; a center line along a length direction of the pivot portion is located in an area at a front side in the biasing direction with respect to a first plane defined by the position of a leading end of the pivot portion and the first rotary shaft; and the pivot portion is pivoted and the joint portion is bent when the slide door is opened and closed, whereby the leading end of the pivot portion projects out from the slide door.

According to a second aspect, the pivot portion further includes a restricting portion for restricting a bending range of the joint portion in the biasing direction so that the center line is located in the area at the front side in the biasing direction with respect to the first plane in the power feeding wiring structure according to the first aspect.

According to a third aspect, the joint portion is provided between a leading end position and a base end position of the pivot portion and includes a second rotary shaft substantially parallel to the first rotary shaft; and the pivot portion is bent about the second rotary shaft in the power feeding wiring structure according to the first or second aspect.

According to a fourth aspect, the pivot portion receives a tensile force from the protection tube when the slide door is closed, whereby the biasing portion accumulates the elastic energy corresponding to the tensile force, in the power feeding wiring structure according to any one of the first to third aspects.

### Effect of Invention

According to the power feeding wiring structure of the first to fourth aspects, the center line along the length direction of the pivot portion is located in the area at the front side in the biasing direction with respect to the first plane defined by the position of the leading end of the pivot portion and the first rotary shaft. This causes the pivot portion to be pivoted and the joint portion to be bent when the slide door is opened and closed, whereby the leading end of the pivot portion projects out from the slide door. Thus, the interference of the slide door and the protection tube can be prevented when the slide door is opened and closed.

### Brief Description of Drawings

FIG. 1 is a side view showing an example of the overall configuration of an automotive vehicle in an embodiment of the present invention,
FIG. 2 is a side view showing an example of a power feeding wiring structure,
FIG. 3 is a side view showing the example of the power feeding wiring structure,
FIG. 4 is a side view showing an example of the configuration of a pivot portion,
FIG. 5 is a side view showing an example of the configuration of a joint portion,
FIG. 6 is a side view showing the example of the configuration of the joint portion, and
FIG. 7 is a front view showing an example of the power feeding wiring structure.

### Embodiment of Invention

Hereinafter, an embodiment of the present invention is described in detail with reference to the drawings.

### <1. Configurations of Automotive Vehicle and Slide Door>

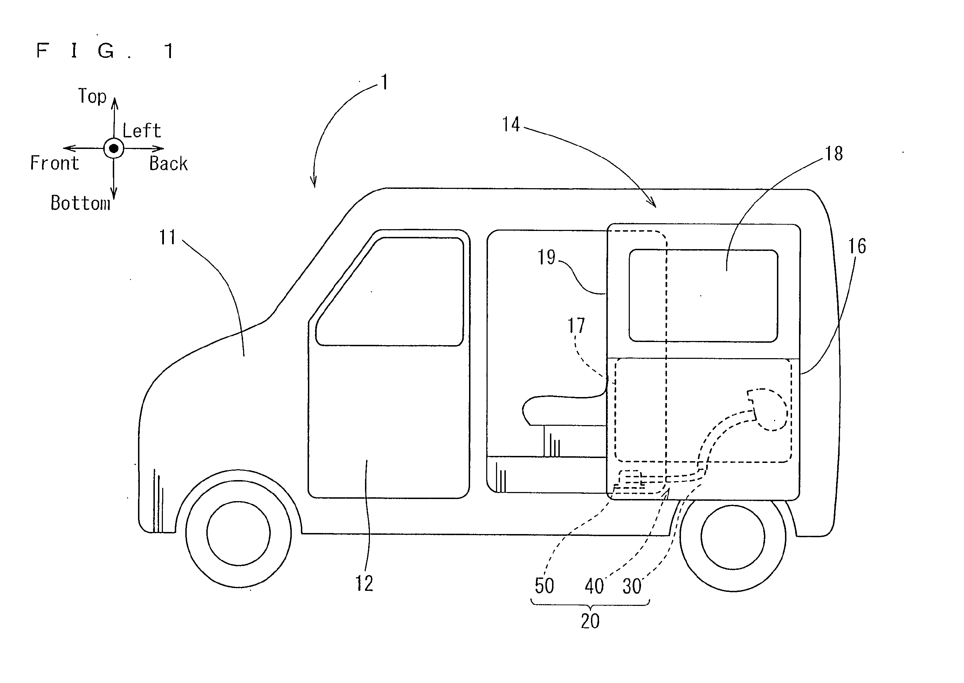

FIG. 1 is a side view showing an example of the overall configuration of an automotive vehicle 1 in an embodiment of the present invention. As shown in FIG. 1, the automotive vehicle 1 mainly includes a substantially box-shaped vehicle body 11, front doors 12 and a slide door 14 and is used as a passenger vehicle or a truck. Note that coordinate axes indicating forward and backward directions, lateral direction and vertical direction are attached to FIG. 1 and subsequent Figures to clarify a directional relationship thereof as needed.

The front doors 12 are hinged opening doors and provided on both left and right side surfaces of the vehicle body 11. Further, the slide door 14 is an opening door which moves back and forth along a desired opening path. As shown in FIG. 1, the slide door 14 mainly includes an outer panel 16 made of metal, an inner panel 17 made of resin, a window pane 18 and a window frame 19 provided in upper parts of the outer panel 16 and the inner panel 17.

Although the slide door 14 is provided only on the left side surface of the vehicle body 11 here in FIG. 1, the arrangement of the slide door 14 is not limited to this. For example, the slide door 14 may be provided on either one of the left and right side surfaces or may be provided on each of the left and right side surfaces. Further, opening doors which move back and forth may be used as the front doors 12 instead of the hinged opening doors.

### <2. Configuration of Power Feeding Wiring Structure>

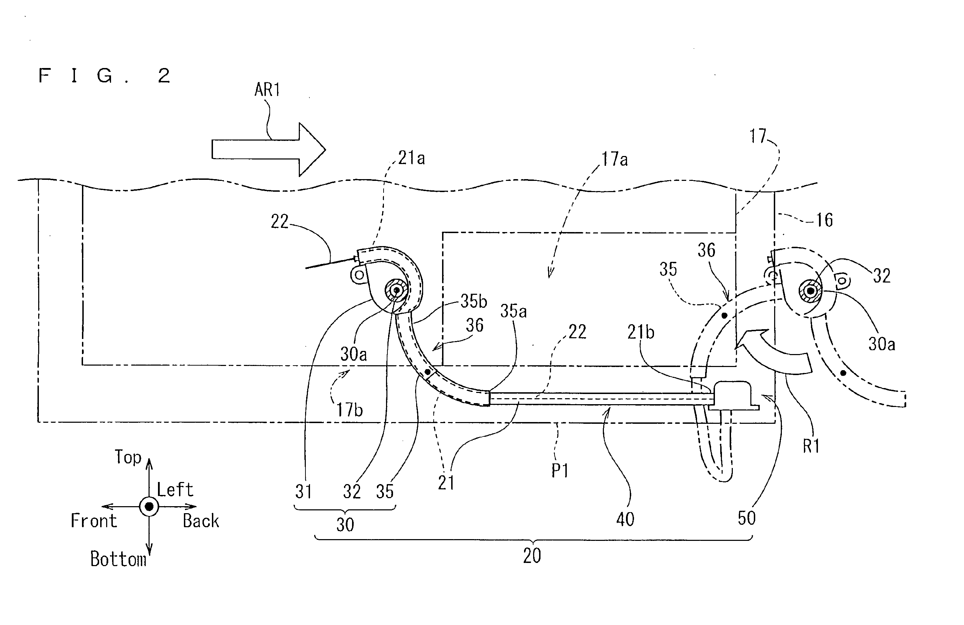

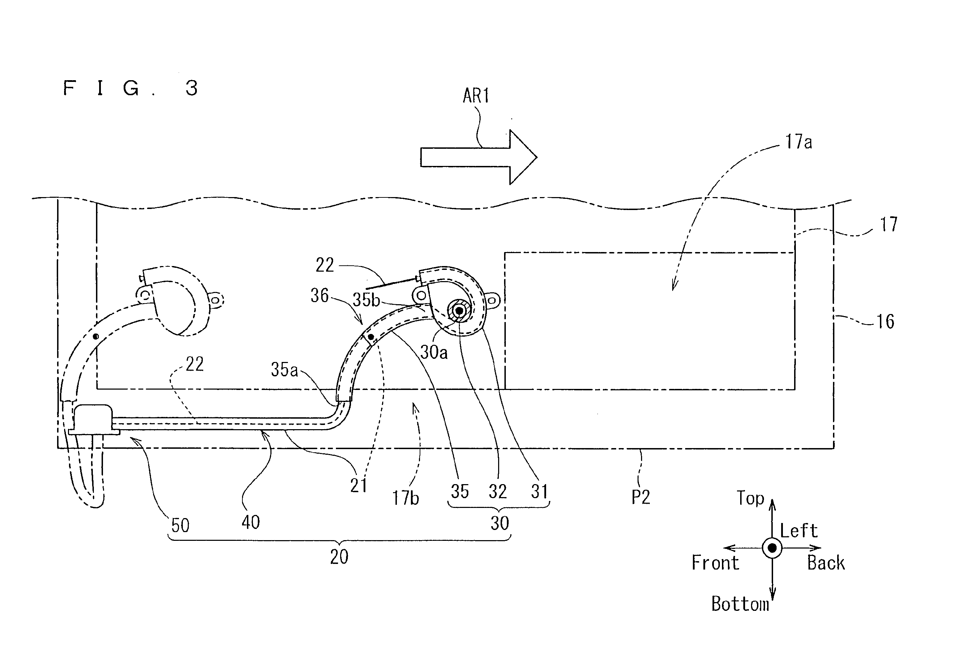

FIGS. 2 and 3 are respectively side views showing an example of a power feeding wiring structure 20 at a closed position P1 and at an open position P2 of the slide door 14. The power feeding wiring structure 20 prevents an excessive load from being applied to a wiring harness 22 without hindering forward and backward movements of the slide door 14. As shown in FIGS. 2 and 3, the power feeding wiring structure 20 mainly includes a slide door side fixing device 30, a linking portion 40 and a vehicle body side fixing device 50.

As shown in FIGS. 2 and 3, the slide door side fixing device 30 is provided at a desired position of the slide door 14 (more specifically, fixed at the desired position of the slide door 14).

Electrical components (not shown) provided in the slide door 14 include, for example, a motor for power windows and a switch for opening and closing the power windows. These unillustrated electrical components may be, for example, mounted in a mounting area 17a enclosed by the outer and inner panels 16, 17. Note that detailed hardware configuration of the slide door side fixing device 30 is described later.

The linking portion 40 is arranged between the vehicle body 11 and the slide door 14 and electrically connects the slide door side fixing device 30 and the vehicle body side fixing device 50. As shown in FIGS. 2 and 3, the linking portion 40 is formed by a wire protection tube 21 and the wiring harness 22.

Here, the wire protection tube 21 is a flexible and substantially cylindrical resin tube. For example, a corrugated tube is used as the wire protection tube 21. The wiring harness 22 is composed of a plurality of wires arranged in the wire protection tube 21 and electrically connects the vehicle body 11 and the slide door 14.

As shown in FIGS. 2 and 3, the vehicle body side fixing device 50 is provided at a desired position of the vehicle body 11 (more specifically, fixed at the desired position of the vehicle body 11).

Note that although another end 21b of the wire protection tube 21 is arranged in the vehicle body side fixing device 50 as shown in FIGS. 2 and 3, there is no limitation to this. For example, the wire protection tube 21 may be fixed to the vehicle body side fixing device 50 with the other end 21b arranged outside the vehicle body side fixing device 50. That is, the vehicle body side fixing device 50 fixes the other end 21 b side (vicinity of the other end 21 b) of the wire protection tube 21.

### <3. Configuration of Slide Door Side Fixing Device>

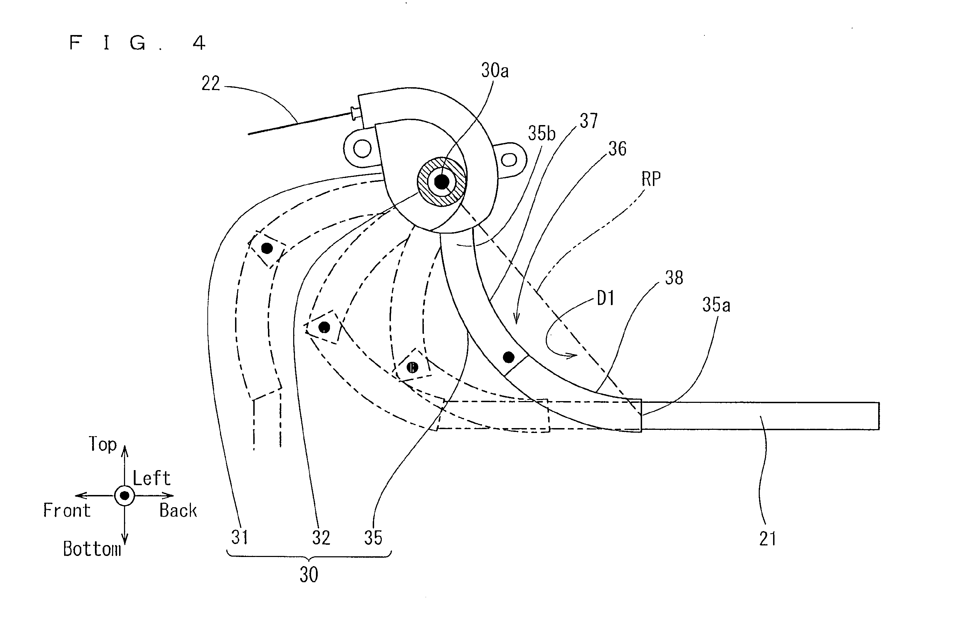

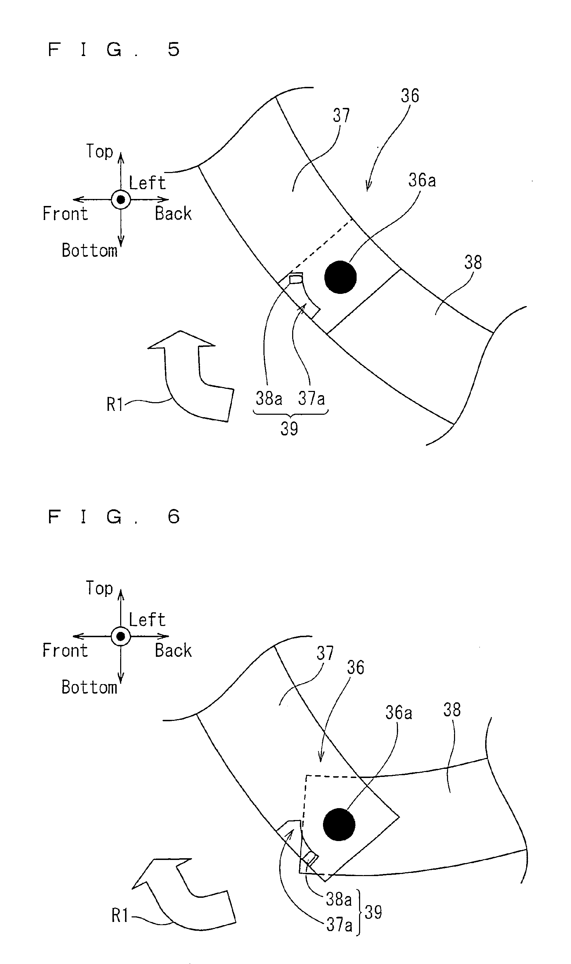

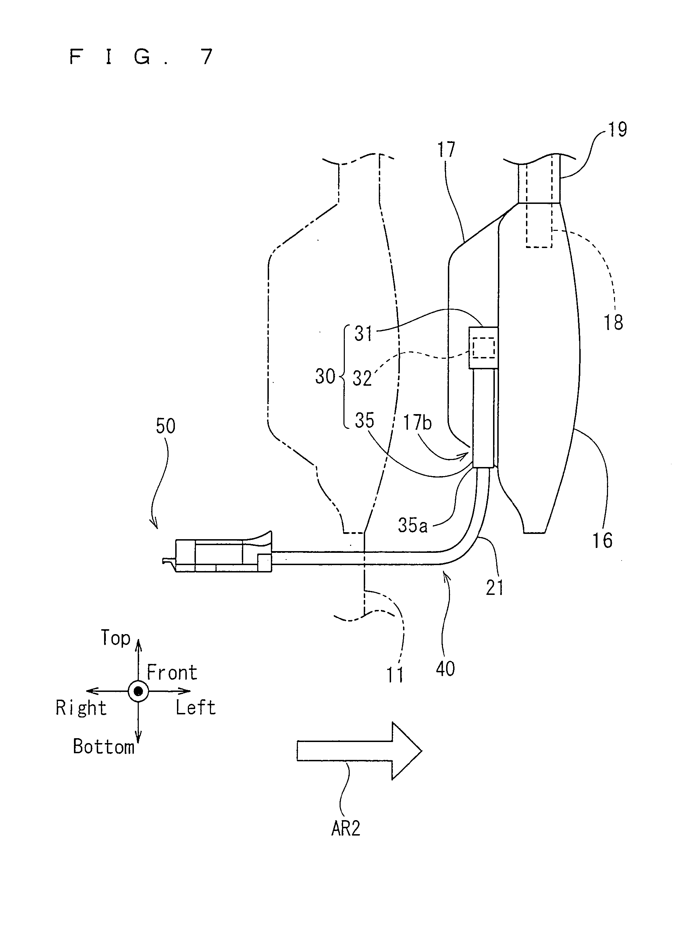

FIG. 4 is a side view showing an example of the configuration of a pivot portion 35. FIGS. 5 and 6 are side views showing an example of the configuration of a joint portion 36. FIG. 7 is a front view showing an example of the power feeding wiring structure 20. As shown in FIGS. 2 to 4 and 7, the slide door side fixing device 30 mainly includes a base portion 31, a biasing portion 32 and the pivot portion 35.

The base portion 31 is a supporting body for pivotably supporting the pivot portion 35. As shown in FIGS. 2 and 3, the base portion 31 is fixed at a desired position in the slide door 14 while guiding the wire protection tube 21.

Although one end 21a of the wire protection tube 21 is arranged in the base portion 31 here as shown in FIGS. 2 and 3, there is no limitation to this. For example, the wire protection tube 21 may be fixed to the base portion 31 with the one end 21 a arranged outside the base portion 31. That is, the base portion 31 of the slide door side fixing device 30 fixes the one end 21 a side (vicinity of the one end 21 a) of the wire protection tube 21.

The biasing portion 32 is made of an elastic member such as a torsion coil spring. The biasing portion 32 rotates the pivot portion 35 in a direction of an arrow R1 (biasing direction) by accumulated elastic energy.

For example, when the base portion 31 moves in a direction (forward direction) opposite to an arrow AR1 together with the slide door 14 when the slide door 14 is closed, the wire protection tube 21 is pulled in the direction opposite to the arrow AR1 (solid line of FIG. 2). In this way, the pivot portion 35 receives a pulling force in a direction of the arrow AR1 (backward direction) from the wire protection tube 21. Thus, the pivot portion 35 is pivoted in a direction opposite to the arrow R1 and elastic energy corresponding to this tensile force is accumulated in the biasing portion 32.

On the other hand, when the base portion 31 moves in the direction of the arrow AR1 (backward direction) together with the slide door 14 when the slide door 14 is opened, the tensile force acting on the wire protection tube 21 gradually decreases. In this way, the elastic energy accumulated in the biasing portion 32 is gradually released and the pivot portion 35 is pivoted in the direction of the arrow R1. When the wire protection tube 21 reaches a sagging state (chain double-dashed line of FIG. 2), the pivot portion 35 is pivoted to a position shown in chain double-dashed line of FIG. 2.

The pivot portion 35 is a tubular body which is pivotable relative to the base portion 31. As shown in FIGS. 2 and 3, the pivot portion 35 is pivoted about a first rotary shaft 30a relative to the base portion 31 while guiding the wire protection tube 21. Further, as shown in FIGS. 4 to 6, the pivot portion 35 mainly includes the joint portion 36, first and second pivot portion constituting members 37, 38 and a restricting portion 39.

The joint portion 36 is bent according to a force acting on the pivot portion 35 (e.g. biasing force applied from the biasing portion 32 and tensile force applied from the wire protection tube 21) while guiding the wire protection tube.

As shown in FIGS. 4 to 6, the joint portion 36 is provided between the position of a leading end 35a and the position of a base end 35b of the pivot portion 35. Further, the joint portion 36 includes a second rotary shaft 36a substantially parallel to the first rotary shaft 30a. In this way, the joint portion 36 rotatably connects the first and second pivot portion constituting members 37, 38 which are cylindrical bodies, and the pivot portion 35 is bent about the second rotary shaft 36a of the joint portion 36.

The restricting portion 39 restricts a bending range of the joint portion 36 in the direction of the arrow R1 and the direction opposite to the arrow R1. As shown in FIGS. 5 and 6, the restricting portion 39 mainly includes a cutout 37a and a fitting portion 38a.

The cutout 37a is a recess cut along an arc centered on the second rotary shaft 36a near an end of the first pivot portion constituting member 37 on the second rotary shaft 36a side. Further, the fitting portion 38a is a projection provided near an end of the second pivot portion constituting member 38 on the second rotary shaft 36a side and projecting out from a side surface of the pivot portion constituting member 38.

In this way, the bending range of the joint portion 36 in the direction of the arrow R1 is restricted to a fixed range (range shown in FIGS. 5 and 6 in this embodiment) by the cutout 37a when the fitting portion 38a of the second pivot portion constituting member 38 is fitted into the cutout 37a of the first pivot portion constituting member 37.

Here, the shape of the pivot portion 35 and a bending movement are further studied. For example, if the planes of FIGS. 2 to 6 are defined as a plane normal to the first rotary shaft 30a, a cross-section of the pivot portion 35 cut along this plane (second plane) is arched when the position of the fitting portion 38a with respect to the cutout 37a is as shown in FIG. 5. That is, as shown in FIG. 4, if a reference plane RP (first plane) is defined by the position of the leading end 35a of the pivot portion 35 and the first rotary shaft 30a, a center line CL along a length direction of the pivot portion 35 is arcuate and located in an area D1 at a front side in the direction of the arrow R1 with respect to the reference plane RP.

Further, as shown in FIGS. 5 and 6, the bending range of the joint portion 36 is restricted by the restricting portion 39. That is, even if the joint portion 36 is bent, the center line CL continues to be located in the area D1 at the front side in the direction of the arrow R1 with respect to the reference plane RP.

In this way, the pivot portion 35 is pivoted and the joint portion 36 is bent when the slide door 14 is opened and closed, whereby the leading end 35a of the pivot portion 35 projects out from the slide door 14 through an opening 17b (see FIG. 7).

Thus, even if the slide door 14 moves in the backward direction and a direction of an arrow AR2 (leftward direction) (see FIG. 7) and the wire protection tube 21 is pulled in forward and backward directions and lateral direction when the slide door 14 is opened and closed, the interference of the inner panel 17 and the wire protection tube 21 can be prevented.

Particularly, when the pivot portion 35 receives a tensile force from the wire protection tube 21 (case of FIG. 4, corresponding to the pivot portion 35 shown in solid line and chain double-dashed line), the joint portion 36 is bent according to this tensile force. That is, when the pivot portion 35 receives a tensile force from the wire protection tube 21, the height (position in a vertical direction) of the leading end 35a of the pivot portion 35 is kept substantially at the same height as shown in FIG. 4.

Further, when the slide door 14 is opened and closed, the power feeding wiring structure 20 can also prevent the interference of the pivot portion 35 with the electrical components mounted in the mounting area 17a (see FIGS. 2 and 3).

Note that the center line CL along the length direction of the pivot portion 35 may be, for example, a line segment connecting centers of gravity of cross-sections of the pivot portion 35 in a width direction.

### <4. Advantage of Power Feeding Wiring Structure of Embodiment>

As described above, the power feeding wiring structure 20 of this embodiment can prevent the interference of the inner panel 17 of the slide door 14 and the wire protection tube 21 and the interference of the electrical components mounted in the mounting area 17a and the pivot portion 35. Thus, the power feeding wiring structure 20 can realize satisfactory opening and closing movements of the slide door.

### <5. Modifications>

Although the embodiment of the present invention has been described above, the present invention is not limited to the above embodiment and various modifications can be made.

Although the wire protection tube 21 is a flexible and substantially cylindrical resin tube in the above embodiment, the shape of the wire protection tube 21 is not limited to this. For example, a flexible and rectangular resin tube may be used as the wire protection tube 21.

### List of Reference Signs

- 1: automotive vehicle
- 11: vehicle body
- 14: slide door
- 16: outer panel
- 17: inner panel
- 17a: mounting area
- 17b: opening
- 18: window pane
- 19: window frame
- 20: power feeding wiring structure
- 21: wire protection tube
- 21a: one end
- 21 b: other end
- 22: wiring harness
- 30: slide door side fixing device
- 30a: first rotary shaft
- 31: base portion
- 32: biasing portion
- 35: pivot portion
- 35a: leading end
- 35b: base end
- 36: joint portion
- 36a: second rotary shaft
- 37: first pivot portion constituting member
- 37a: cutout
- 38: second pivot portion constituting member
- 38a: fitting portion
- 39: restricting portion
- 40: linking portion
- 50: vehicle body side fixing device
- P1: closed position
- P2: open position
- RP: reference plane
- CL: center line
- D1: area

## Claims

1. A power feeding wiring structure, comprising:
(a) a protection tube;
(b) a plurality of wires arranged in the protection tube;
(c) a slide door side fixing device provided on a slide door and adapted to restrict a moving range of the protection tube near the slide door while fixing one end of the protection tube; and
(d) a vehicle body side fixing device provided on a vehicle body and adapted to fix the other end of the protection tube;
wherein:
the slide door side fixing device includes:
(c-1) a base portion which is fixed in the slide door while guiding the protection tube,
(c-2) a pivot portion which is pivoted about a first rotary shaft relative to the base portion while guiding the protection tube, and
(c-3) a biasing portion which rotates the pivot portion in a biasing direction by accumulated elastic energy;
the pivot portion includes a joint portion which is bent according to a force acting on the pivot portion while guiding the protection tube;
a center line along a length direction of the pivot portion is located in an area at a front side in the biasing direction with respect to a first plane defined by the position of a leading end of the pivot portion and the rotary shaft; and
the pivot portion is pivoted and the joint portion is bent when the slide door is opened and closed, whereby the leading end of the pivot portion projects out from the slide door.

2. The power feeding wiring structure of claim 1, wherein:
the pivot portion further includes a restricting portion for restricting a bending range of the joint portion in the biasing direction so that the center line is located in the area at the front side in the biasing direction with respect to the first plane.

3. The power feeding wiring structure of claim 1, wherein:
the joint portion is provided between a leading end position and a base end position of the pivot portion and includes a second rotary shaft substantially parallel to the first rotary shaft; and
the pivot portion is bent about the second rotary shaft.

4. The power feeding wiring structure of any one of claims 1 to 3, wherein:
the pivot portion receives a tensile force from the protection tube when the slide door is closed, whereby the biasing portion accumulates the elastic energy corresponding to the tensile force.
